Europäisches Patentamt

European Patent Office

Office européen des brevets

(19)

(11) Veröffentlichungsnummer: **0 298 471**
**B1**

(12) **EUROPÄISCHE PATENTSCHRIFT**

(45) Veröffentlichungstag der Patentschrift:
**27.12.90**

(51) Int. Cl.⁵: **B60R 19/56**

(21) Anmeldenummer: **88110853.4**

(22) Anmeldetag: **07.07.88**

(54) **Kipperfahrzeug mit um eine rückwärtige Fahrzeugquerachse verschwenkbarem Aufbau und mit im rückwärtigen Bereich angeordnetem Unterfahrschutz.**

(30) Priorität: **07.07.87 DE 3722312**

(43) Veröffentlichungstag der Anmeldung:
**11.01.89 Patentblatt 89/2**

(45) Bekanntmachung des Hinweises auf die Patenterteilung:
**27.12.90 Patentblatt 90/52**

(84) Benannte Vertragsstaaten:
**FR GB IT**

(56) Entgegenhaltungen:
**DE-U- 8 324 904**
**GB-A- 1 586 727**
**GB-A- 2 122 551**
**US-A- 4 514 002**
**US-A- 4 582 351**

(73) Patentinhaber: **DAIMLER-BENZ AKTIENGESELLSCHAFT, Mercedesstrasse 136, D-7000 Stuttgart 60(DE)**

(72) Erfinder: **Bode, Peter, Alemannenstrasse 7, D-7056 Weinstadt(DE)**
Erfinder: **Herzog, Paul, Sandweg 12, D-7128 Lauffen(DE)**
Erfinder: **Zittel, Siegfried, Gerstenweg 3, D-7300 Esslingen(DE)**

ACTORUM AG

## Beschreibung

Die Erfindung betrifft ein Kipperfahrzeug mit um eine rückwärtige Fahrzeugquerachse verschwenkbarem Aufbau und mit im rückwärtigen Endbereich angeordnetem Unterfahrschutz, der einen rückwärtigen Schutzbalken und diesen abstützende Längsstreben umfaßt und der für den Straßenfahrbetrieb in vorgegebener Höhe über dem Fahrbahnniveau festgelegt ist, wobei der Unterfahrschutz zusätzlich zu seiner durch Verriegelung festgelegten Lage für den Straßenfahrbetrieb (Straßenverkehrslage) eine angehobene Lage für den Geländebetrieb (Geländeverkehrslage) aufweist, in dieser Lage arretierbar ist und aus dieser Lage über den im rückwärtigen Endbereich nach unten verschwenkbaren Aufbau in Richtung auf die Straßenverkehrslage auslenkbar ist.

Kipperfahrzeuge der angesprochenen Art sind aus dem deutschen Gebrauchsmuster DE-U 8 324 904 bekannt. Der Unterfahrschutz ist dabei über einen durch eine Langlochführung in seiner wirksamen Länge variablen Hebel mit dem schwenkbaren Aufbau verbunden, so daß bei Verschwenkung des Aufbaues nach hinten unten der Unterfahrschutz bis zu einer durch einen Anschlag vorgegebenen unteren Schwenklage abgesenkt werden kann, wobei der Aufbau über seine dieser Schwenklage entsprechende Schwenklage hinaus aufgrund der Langlochführung weiter nach unten verschwenkt werden kann.

Die Langlochführung ermöglicht zudem auch, bei Verschwenkung des Unterfahrschutzes gegenüber dem Aufbau nach oben in seine Geländeverkehrslage eine Arretierung des Unterfahrschutzes in dieser Lage. Unterfahrschutz und Aufbau sind dann allerdings nicht mehr relativ zueinander verschwenkbar. Dementsprechend muß der Unterfahrschutz zum Aufbau bei dieser bekannten Konstruktion so abgestimmt sein, daß der Unterfahrschutz in der Relativlage zum Aufbau, die seiner Geländeverkehrslage entspricht, Aufbaufunktionen nicht beeinträchtigt, so beispielsweise auch das Öffnen rückwärtiger Klappen oder dergleichen.

Der Erfindung liegt die Aufgabe zugrunde, ein Kipperfahrzeug dieser Art dahingehend weiterzubilden, daß Funktionsbeeinträchtigungen des Aufbaus in seinen verschiedenen Kipplagen durch den Unterfahrschutz vermieden werden.

Gemäß der Erfindung wird dies dadurch erreicht, daß der Unterfahrschutz durch den Aufbau gegen Federkraft nach unten, als in Richtung auf den Boden auslenkbar ist. Durch diese Auslenkbarkeit kann der Unterfahrschutz unter Schwenken des Aufbaues über den Aufbau nach unter abgedrängt werden, so daß wechselseitige Beeinträchtigungen vermieden werden und es kann der Unterfahrschutz nach Freigabe durch den verschwenkbaren Aufbau aufgrund der Federbelastung wieder in seine Ausgangslage zurückkehren.

Die Abstützung des Unterfahrschutzes erfolgt bei die erfindungsgemäßen Lösung bevorzugt über einen ausziehbaren Federzylinder, der eine zum Fahrzeugrahmen abstützende Verbindung darstellt.

Die Erfindung wird im folgenden mit weiteren erfindungsgemäßen Details anhand der Zeichnungen näher erläutert.

Es zeigen:

Figur 1 in schematischer Darstellung den rückwärtigen Rahmenteil eines Nutzfahrzeuges mit daran angelenktem Unterfahrschutz in einer Verriegelungsstellung für den Unterfahrschutz, die dessen für den Straßenverkehrsbetrieb vorgesehener Höhenlage in Bezug auf das Fahrbahnniveau entspricht,

Figur 2 eine Darstellung entsprechend jener gemäß Figur 1, jedoch nach Verschwenken des Unterfahrschutzes in eine gegenüber der Straßenverkehrslage angehobene Geländeverkehrslage,

Figur 3 eine im Prinzip der Darstellung gemäß Figur 1 entsprechende Ausgestaltung, bei der die zur Abstützung des Unterfahrschutzes gegenüber dem Rahmen vorgesehene Stütze durch einen Federzylinder gebildet ist,

Figur 4 das Ausführungsbeispiel gemäß Figur 3 in einer der Figur 2 entsprechenden Schwenklage des Unterfahrschutzes, und

Figur 5 eine schematische Darstellung, in der das Zusammenwirken des Unterfahrschutzes in seiner Geländelage mit der auf dem Rahmen des Fahrzeuges gelagerten Kippermulde gezeigt ist.

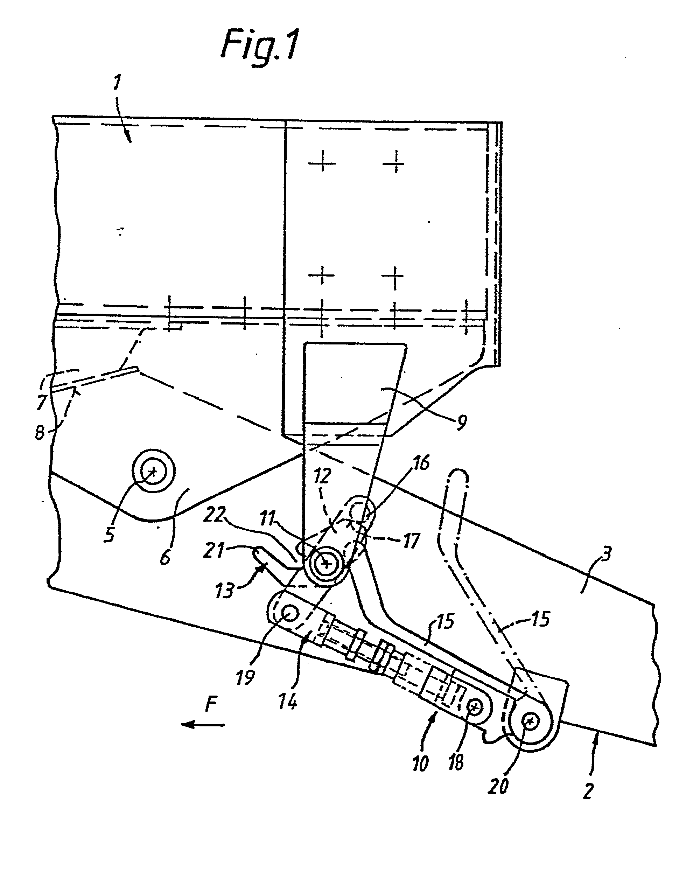

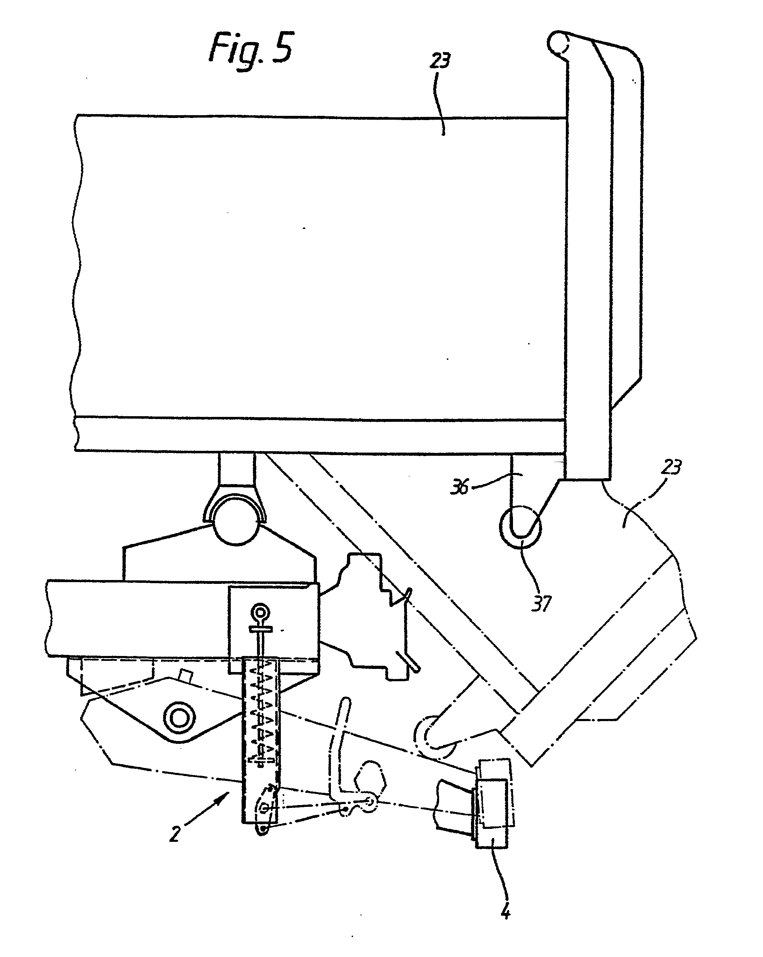

Figur 1 zeigt in Seitenansicht das hintere Endteil des Rahmens 1 eines Nutzfahrzeuges, an dem ein Unterfahrschutz 2, der nur teilweise gezeigt ist, angebracht ist. Der Unterfahrschutz 2 weist, beiden Längsseiten des Fahrzeuges zugeordnet, Längsstreben 3 auf, die an ihrem rückwärtigen Ende (siehe Figur 5) durch einen Schutzbalken 4 verbunden sind.

Der Unterfahrschutz 2 ist über die Längsstreben 3 an der Unterseite des Rahmens 1 angelenkt, wobei, wie Figur 1 zeigt, die Anlenkung über eine Querachse 5 erfolgt, die ihrerseits an einer den Rahmen 1 nach unten fortsetzenden Lasche 6 mit dem Rahmen 1 verbunden ist. Der Querachse 5 in Bezug auf die Vorwärtsfahrrichtung - Pfeil F - vorgelagert ist an der Unterseite des Rahmens 1 ein Anschlag 7 vorgesehen, gegen den die Längsstrebe 3 des Unterfahrschutzes mit einer Anschlagfläche 8 anliegt. In der in Figur 1 dargestellten Lage erstreckt sich die Längsstrebe 3 entgegen Pfeilrichtung F schräg nach hinten und unten, und zwar derart, daß der in Figur 1 nicht dargestellte Schutzbalken 4 eine Höhenlage einnimmt, die der für den Straßenverkehrsbetrieb gesetzlich vorgegebenen Höhenlage entspricht.

Zur Querachse 5 in Gegenrichtung gegenüber dem Anschlag 7 versetzt ist am Rahmen 1 eine Stütze 9 befestigt, über die in Verbindung mit einer Spannvorrichtung 10 die Längsstrebe 3 und damit der Unterfahrschutz 2 fixierbar ist. Die Spannvorrichtung 10 umfaßt einen an der Stütze 9 um die Achse 11 verschwenkbaren Verriegelungshebel 12, der mit einem der Längsstrebe 3 zugeordneten Verriegelungssegment 13 zusammenwirkt und der, wie Figur 1 zeigt, über ein Zwischenstück 14 mit einem Schwenkhebel 15 verbunden ist. Der Schwenkhebel ist im dargestellten Ausführungsbeispiel als Handhebel ausgebildet, kann aber auch über ein Stellelement oder dergleichen betätigbar sein, so daß eine Fernbetätigung möglich ist. Dies ist hier allerdings nicht gezeigt.

Das Verriegelungssegment 13 wirkt mit dem Verriegelungshebel 12 über einen dem Verriegelungshebel 12 zugeordneten Nocken 16 zusammen, der in der in Figur 1 dargestellten Position der Spannvorrichtung eine obere Anlaufkurve 17 des Verriegelungssegmentes übergreift und dadurch die Längsstrebe 3 bezogen auf die Querachse 5 im Uhrzeigersinn vorspannt und gegen den Anschlag 7 spielfrei verspannt. In dieser Spannlage nimmt der Schwenkhebel 15 die in Vollinien dargestellte Stellung ein, während strichpunktiert die Lage des Schwenkhebels 15 eingezeichnet ist, in der der Nocken 16 von der Anlaufkurve 17 des Verriegelungssegmentes 13 freiliegt.

In der in Vollinien gezeigten Spannlage liegt der dem Schwenkhebel 15 zugeordnete Anlenkpunkt 18 des Zwischenstückes 14 unterhalb der Verbindungslinie, die durch den Anlenkpunkt 19 des Zwischenstückes 14 am Verriegelungshebel 12 und die Schwenkachse 20 des Schwenkhebels 15 bestimmt ist. In der Öffnungslage des Schwenkhebels 15, die durch die strichpunktierte Stellung des Schwenkhebels symbolisiert ist, liegt der Anlenkpunkt 18 dagegen, was hier nicht dargestellt ist, oberhalb dieser Verbindungslinie. Dementsprechend durchläuft der Anlenkpunkt 18 eine Totpunktstellung und es ist deshalb der Verriegelungshebel 12 in der Verriegelungsstellung gesichert. Das Zwischenstück 14 ist, wie die schematische Darstellung andeutet, in Streckrichtung federnd vorgespannt. Zusätzlich ist das Zwischenstück in Bezug auf seine Gesamtlänge, aus der es bis zu einem gewissen Grade federnd zusammengedrückt werden kann, einstellbar.

In Bezug auf den Geländeeinsatz kann die in Figur 1 eingestellte, der Straßenverkehrslage entsprechend Höhenlage des Unterfahrschutzes eine Beschränkung der Bodenfreiheit und des Böschungswinkels bedeuten.

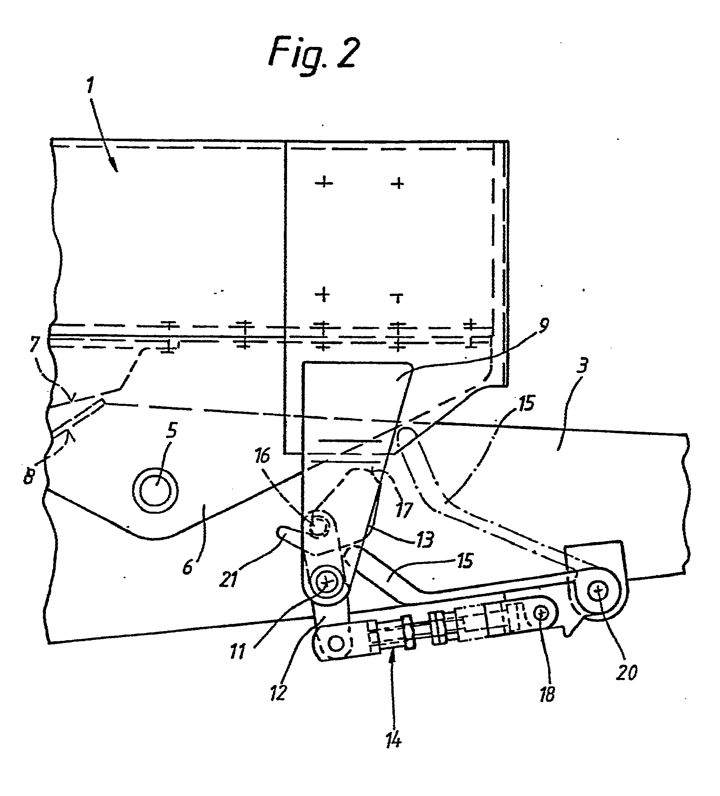

Um solche Beschränkungen für den Geländeeinsatz zu vermeiden, kann der Unterfahrschutz, wie in Figur 2 dargestellt, in eine Geländeverkehrslage nach oben um die Querachse 5 verschwenkt werden. Ausgehend von der Lage gemäß Figur 1 ist dies dadurch möglich, daß zunächst durch Verstellen des Schwenkhebels 15 in seine strichpunktierte Lage die Verspannung gelöst wird und daß anschließend der Unterfahrschutz in die in Figur 2 dargestellte Lage angehoben wird. Beim Anheben kommt der Nocken 16 des Verriegelungshebels 12 zunächst gegen die Nase 21 des Verriegelungssegmentes 13 zur Anlage. In dieser Stellung kann dann der Schwenkhebel 15 nach unten gedrückt werden, wodurch der Verriegelungshebel 12 im Uhrzeigersinn verschwenkt wird und der Nocken 16 in eine maulartige Öffnung 22 des Verriegelungssegmentes eingreift. In dieser Lage ist, da die maulartige Öffnung 22 den Nocken 16 nach oben und unten übergreift, die Höhenlage der Längsstrebe 3 gegenüber der Stütze 9 fixiert. Auch bei der Verspannung in der angehobenen Geländeverkehrslage befindet sich der Anlenkpunkt 18 in einer Übertotpunktlage, so daß durch die federnde Vorspannung des Zwischenstückes 14 eine selbsttätige Sicherung erreicht ist.

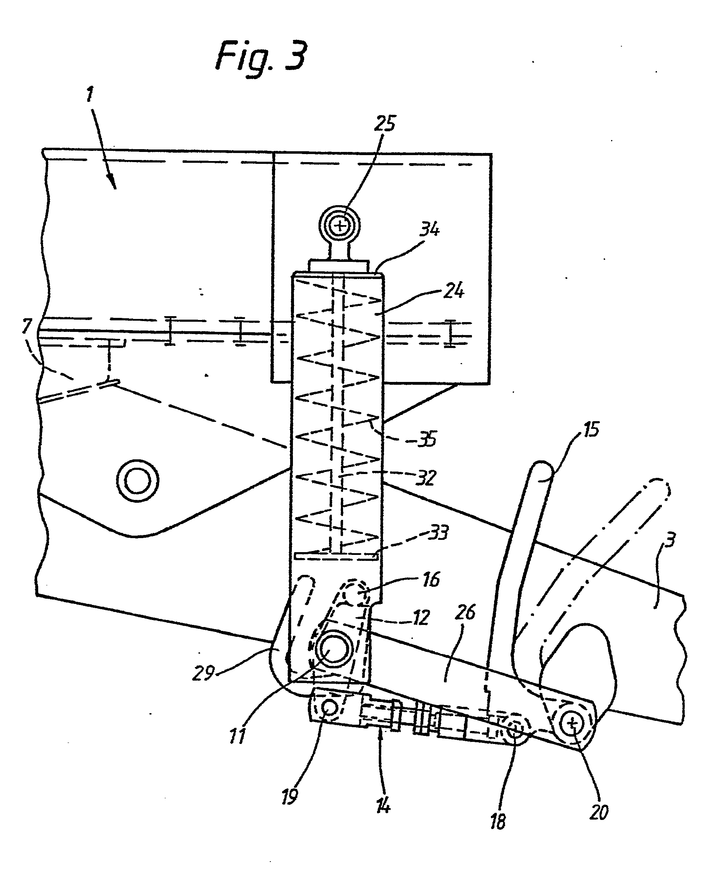

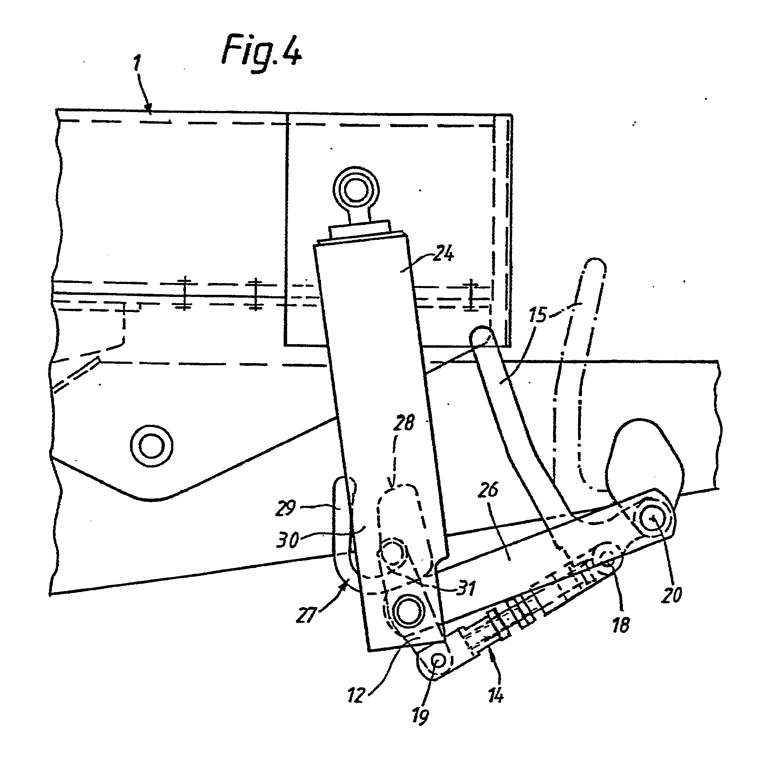

Eine im grundsätzlichen Aufbau entsprechende Gestaltung der Spannvorrichtung ist in den Figuren 3 und 4 veranschaulicht. Für gleiche Teile finden deshalb gleiche Bezugszeichen Verwendung und es kann auf die Schilderung den übereinstimmenden Details weitgehend verzichtet werden. Insoweit wird auf die bisherigen Ausführungen verwiesen.

Der Lösung gemäß Figuren 3 und 4 liegt der Gekanke zugrunde, daß der Unterfahrschutz in seiner Geländeverkehrslage dann für den Betrieb des Fahrzeuges nachteilig ist, wenn dieses beispielsweise als Kipperfahrzeug ausgebildet ist und die Kippermulde zum Abkippen nach hinten hochgeschwenkt wird.

Diese Situation ist in Figur 5 veranschaulicht, wo die Kippermulde mit 23 bezeichnet ist. Auf die Darstellung gemäß Figur 5 wird im weiteren noch eingegangen.

Abweichend von dem in Figuren 1 und 2 Gezeigten ist in den Figuren 3 und 4 als Stütze ein Federzylinder 24 vorgesehen. Dieser Federzylinder 24 ist einerseits am Rahmen 1 im Anlenkpunkt 25 schwenkbar angelenkt. Er trägt an seinem der Anlenkung 25 gegenüberliegenden Ende die Achse 11, auf der der Verriegelungshebel 12 abgestützt ist. Der Verriegelungshebel seinerseits ist wiederum mit einem Nocken 16 versehen und dem Nocken 16 gegenüberliegend weist er die Anlenkung 19 auf, in der das Zwischenstück 14 angeschlossen ist, das seinerseits mit dem Schwenkhebel 15 im Anlenkpunkt 18 verbunden ist. Die Schwenkachse des Schwenkhebels 15 ist wiederum mit 20 bezeichnet. Der Abstand zwischen der Achse 11 des Verriegelungshebels 12, und damit zwischen dem Federzylinder 24 und der Schwenkachse 20 des Schwenkhebels 15 ist durch einen Lenker 26 festgelegt. Eine solche Festlegung ist nötig, um bei Verschwenkbarkeit des Federzylinders 24 um den Anlenkpunkt 25 mit der bereits gschilderten Spannvorrichtung 10 im wesentlichen ohne Änderungen arbeiten zu können.

Das Verriegelungssegment 27 ist bei der Ausgestaltung gemäß Figuren 3 und 4 im wesentlichen gleich ausgebildet. Es weist eine Anlaufkurve 28 auf, gegen die der Nocken 16 in der Verriegelungsstellung für die Straßenverkehrslage (Figur 3) verspannt ist. Über den Nocken 16 wird somit die Längsstrebe 3 im Uhrzeigersinn belastet und ist damit, wie anhand der Figuren 1 und 2 erläutert, gegen den Anschlag 7 verspannt.

Das Verriegelungssegment 27 ist desweiteren mit einer Führungsnase 29 versehen, die eine vordere Begrenzung für einen Führungskanal 30 bildet, in dem der Verriegelungsnocken 16 beim Anheben der Längsstrebe 3 in ihre der Geländeverkehrslage entsprechende Stellung nach unten gleitet. In der unteren Endstellung kann der Nocken 16 durch Verschwenkung des Schwenkhebels 15 aus der strichpunktierten Lage in die in Vollinien dargestellte Lage in eine maulartige Öffnung 31 eingreifen, so daß auch bei dieser Ausgestaltung eine Fixierung der Längsstrebe in der der Geländeverkehrslage entsprechenden Lage des Unterfahrschutzes möglich ist.

Figur 3 veranschaulicht den Aufbua des Federzylinders 24. In der rohrartigen Hülse desselben ist eine Kolbenstange 32 angeordnet, die mit dem oberen Anlenkpunkt 25 fest verbunden ist und die an ihrem unteren Ende eine Federauflage 33 aufweist. Zwischen der Federauflage 33 und der oberen Wand 34 des Zylinders ist eine Feder 35 eingespannt. Aufgrund dieser Ausgestaltung kann die Längsstrebe, und damit der Unterfahrschutz ausgehend von der Geländeverkehrslage gemäß Figur 4 bei entsprechende Belastung nach unten verschwenkt werden. Eine Verschwenkung über die der Stäßenverkehrslage gemäß Figur 3 entsprechende Lage nach unten hinaus ist nicht möglich, da diese Lage über den Anschlag 7 begrenzt ist.

Ist den Unterfahrschutz, wie in Figur 4 gezeigt, in seiner der Geländeverkehrslage entsprechenden Lage verriegelt, und liegt der Unterfahrschutz in dieser Verriegelungslage im Schwenkweg der Kippermulde 23, wie in Figur 5 angedeutet, so kann die Kippermulde 25 beim Verschwenken nach hinten unten unmittelbar den Unterfahrschutz beaufschlagen und es kann dadurch der Unterfahrschutz nach unter weggedrückt werden, so daß ein ungestörtes Arbeiten mit der Kippermulde möglich ist. Figur 5 veranschaulicht dies schematisch, indem an der Kippermulde über Füße 26 Stützrollen 37 angebracht sind, die beim Verschwenken der Kippermulde nach unten auf den Längsstreben 3 zur Anlage kommen und dadurch die Schwenkbewegung des Unterfahrschutzes erzwingen. Figur 5 veranschaulicht, daß beim Abdrängen des Unterfahrschutzes 2 über die Kippermulde 23 durch Beaufschlagung der Längsstreben 3 mittels der Stützrollen 37 der Zylinder gegen die Kraft der Feder herausgezogen wird, so daß beim Rückstellen der Kippermulde der Unterfahrschutz selbsttätig in die Geländeverkehrslage als Ausgangslage zurückgestellt wird.

## Patentansprüche

1. Kipperfahrzeug mit um eine rückwärtige Fahrzeugquerachse verschwenkbarem Aufbau und mit im rückwärtigen Endbereich angeordnetem Unterfahrschtz (2), der einen rückwärtigen Schutzbalken (4) und diesen abstützende Längsstreben (3) umfaßt und der für den Straßenfahrbetrieb in vorgegebener Höhe über dem Fahrbahnniveau festgelegt ist, wobei der Unterfahrschutz zusätzlich zu seiner durch Verriegelung festgelegten Lage für den Straßenfahrbetrieb (Straßenverkehrslage) eine angehobene Lage für den Geländefahrbetrieb (Geländeverkehrslage) aufweist, in dieser Lage arretierbar ist und aus dieser Lage über den im rückwärtigen Endbereich nach unten verschwenkbaren Aufbau in Richtung auf die Straßenverkehrslage auslenkbar ist, dadurch gekennzeichnet, daß der Unterfahrschutz durch den Aufbau gegen Federkraft nach unten auslenkbar ist.

2. Kipperfahrzeug nach Anspruch 1, dadurch gekennzeichnet, daß der Unterfahrschutz über eine Abstützung (24) gegenüber dem Fahrzeugrahmen abgestützt ist und daß diese Abstützung durch einen ausziehbaren Federzylinder gebildet ist.

## Claims

1. A tipper vehicle with superstructure swivellable around a rearward vehicle transversal axis, and with bottom travel protector (2) mounted in the rearward end regoin which comprises a rearward protection beam (4) and longitudinal members (3) supporting the latter, and which is secured for road travel operation at a predetermined height above the level of the roadway, the bottom travel protector having additionally to its position secured by bolting for road travel operation (road travel position) a raised position for land travel operation (land travel position), being immobilizable in this position and guidable out of it over the superstructure downwardly swivellably in the rearward end area in the direction of the road travel position, characterized in that the bottom travel protector is downwardly guidable against spring resistance through the superstructure.

2. A tipper vehicle according to claim 1, characterized in that the bottom travel protector is supported by a support (24) against the vehicle chassis, and in that this support is constituted by a telescopic spring cylinder.

## Revendications

1. Véhicule à benne basculante comprenant une superstructure qu'on peut faire basculer autour d'un axe transversal arrière du véhicule, et une protection antiencastrement (2) agencée dans la région d'extrémité arrière et qui comprend une barre de protection arrière (4) et des jambes de force longitudinales qui donnent appui à cette barre et qui, pour la circulation sur route, est fixée à une hauteur prédéterminée au-dessus du niveau de la chaussée, la prtoection anti-encastrement présentant en supplément de sa position pour la circulation sur route (position route), qui est fixée par verrouillage, une position relevée pour la circulation en tout terrain (position tout terrain), pouvant être arrêtée dans cette position et être inclinée de cette position vers la position de circulation sur route sous l'action de la superstructure qu'on peut faire basculer vers le bas dans la région d'extrémité arrière, caractérisé en ce que la protection anti-encastrement peut être inclinée vers le bas sous l'action de la superstructure à l'encontre d'une force élastique.

2. Véhicule à benne basculante selon la revendication 1, caractérisé en ce que la protection anti-encastrement prend appui par rapport au châssis du véhicule par l'intermédiaire d'un support (24) et en ce que ce support est formé par un cylindre à ressort extensible.

# Fig.1

# Fig. 2

# Fig. 3

# Fig.4

Fig. 5